# EUROPEAN PATENT APPLICATION

(11) **EP 1 621 962 A1**
(43) Date of publication of application: **01.02.2006**
(21) Application number: 04017551.5
(22) Date of filing: 23.07.2004
(51) Int. Cl.: G06F 1/16

(54) **Notebook having a display apparatus with changeable shells**

(71) Applicant: VAC Corporation, Taipei (TW)
(72) Inventor: Ling, Alex, Taipei (TW)
(74) Representative: Viering, Jentschura & Partner

(57) **Abstract**

A notebook having a display apparatus with changeable shells has a main body and a display apparatus. The display apparatus has a display module and shells. The display module is pivotly connected with the main body. The display module has a rear face and a front face opposite the rear face. The shells have an outer shell and an inner shell. The outer shell is assembled on the rear face of the display module, and the inner shell is assembled on the front face of the display module. Thereby, the shells of the display apparatus are easily assembled or disassembled, and the exterior of the notebook is more diverse.

## Description

### BACKGROUND OF THE INVENTION

### 1. Field of the Invention

The present invention relates to a notebook having a display apparatus with changeable shells, and more particularly, to a notebook with diverse display apparatus shells that are easily assembled or disassembled.

### 2. Background of the Invention

Because of the improvement of manufacturing technology and the rationality of the price, notebooks have gradually replaced desktops and become main products in the computer market. Notebooks, once only seen in professional settings, now are used by individuals as well. Therefore, in addition to being convenient and having full functions, notebooks have to provide attractive exteriors to meet the interests of various consumers.

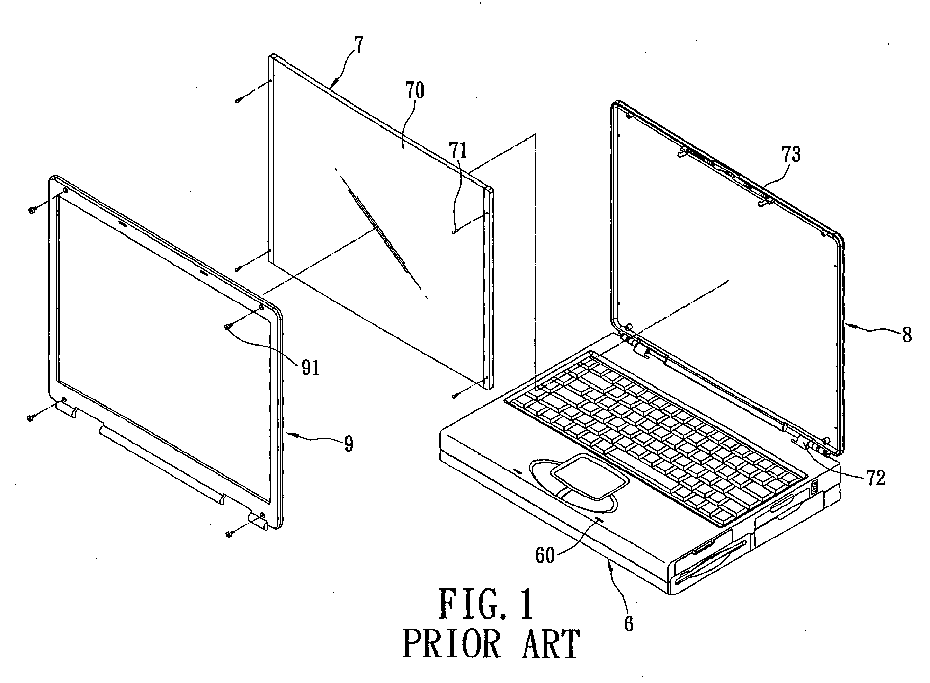

Referring to Fig. 1, a conventional notebook includes a main body 6 and a display apparatus 7. The display apparatus 7 includes a display panel 70, shells, a pivot structure 72, and a latching assembly 73. The shells include an outer shell 8 and an inner shell 9. The pivot structure 72 has an edge fixed on the outer shell 8 and another edge fixed on the main body 6. The latching assembly 73 is fixed on the outer shell 8 to latch a latching hole 60 of the main body 6. The outer shell 8 and the inner shell 9 form a receiving space therebetween. The display panel 70 is received in the receiving space, and has a cable (not shown) connecting to the main body 6. The display panel 70 and the inner shell 9 are secured on the outer shell 8 by means of fastening elements 71, 91, respectively.

As the outer shell 8 is fixed with the pivot structure 72, the latching assembly 73 is fixed on the outer shell 8, and the display panel 70 and the inner shell 9 are fixed on the outer shell 8, it is difficult to disassemble or change the outer shell 8 and the inner shell 9. The exteriors of notebooks having the same equipment lack diversity and the models of notebooks are limited. As a result, manufacturers are unable to promote various styles and competitive prices of products for consumers.

### SUMMARY OF INVENTION

The primary object of the invention is therefore to specify a notebook having a display apparatus with changeable shells, so that the shells of the display apparatus are easily assembled or disassembled, and the exteriors of the shells are diverse.

According to the invention, the object is achieved via a notebook having a display apparatus with changeable shells, comprising a main body and a display apparatus. The display apparatus includes a display module and shells. The display module is pivotly connected with the main body. The display module has a rear face and a front face opposite the rear face. The shells include an outer shell and an inner shell. The outer shell is assembled on the rear face of the display module, and the inner shell is assembled on the front face of the display module.

As the display module is pivotly connected with the main body, the outer shell is assembled on the rear face of the display module, and the inner shell is assembled on the front face of the display module, the shells of the display apparatus are easily assembled or disassembled, and the exteriors of the shells are diverse.

To provide a further understanding of the invention, the following detailed description illustrates embodiments and examples of the invention. Examples of the more important features of the invention thus have been summarized rather broadly in order that the detailed description thereof that follows may be better understood, and in order that the contributions to the art may be appreciated. There are, of course, additional features of the invention which will be described hereinafter and which will form the subject of the claims appended hereto.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
FIG. 1 is an exploded perspective view of a notebook of the prior art;
FIG. 2 is a perspective assembly view of a notebook of a first embodiment of the present invention;
FIG. 3 is an exploded perspective view of a notebook of a first embodiment of the present invention;
FIG. 4 is an exploded perspective view of an outer shell and a display module of a display apparatus of a notebook of a first embodiment of the present invention;
FIG. 5 is an exploded perspective view of an inner shell and a display module of a display apparatus of a notebook of a first embodiment of the present invention;
FIG. 6 is an exploded perspective view of an outer shell and an inner shell of a display apparatus of a notebook of a first embodiment of the present invention;
FIG. 7 is a planar schematic view of an outer shell of a display apparatus of a notebook of a first embodiment of the present invention;
FIG. 8 is a planar schematic view of a display module of a display apparatus of a notebook of a first embodiment of the present invention;
FIG. 9 is a planar schematic view of an inner shell of a display apparatus of a notebook of a first embodiment of the present invention; and
FIG. 10 is an exploded perspective view of a notebook of a second embodiment of the present invention.

### DETAILED DESCRIPTION OF THE EMBODIMENTS

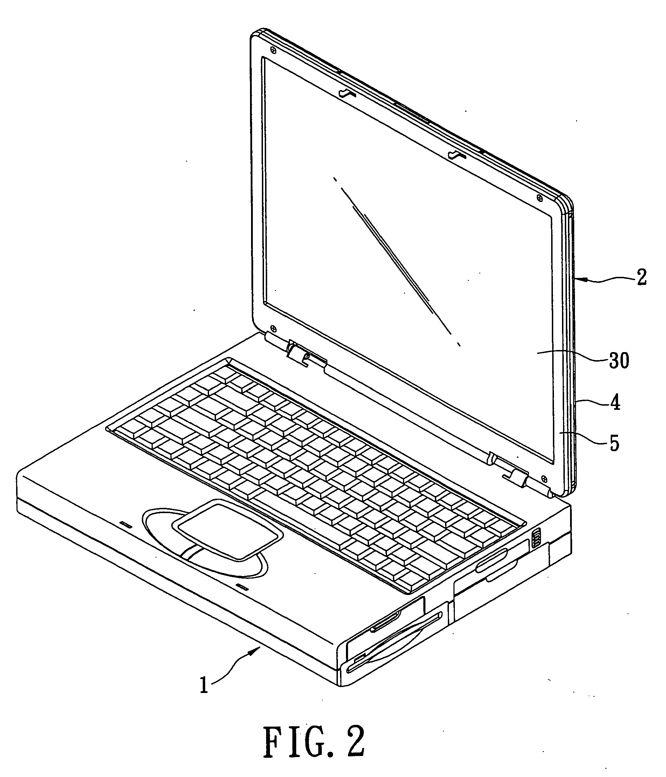

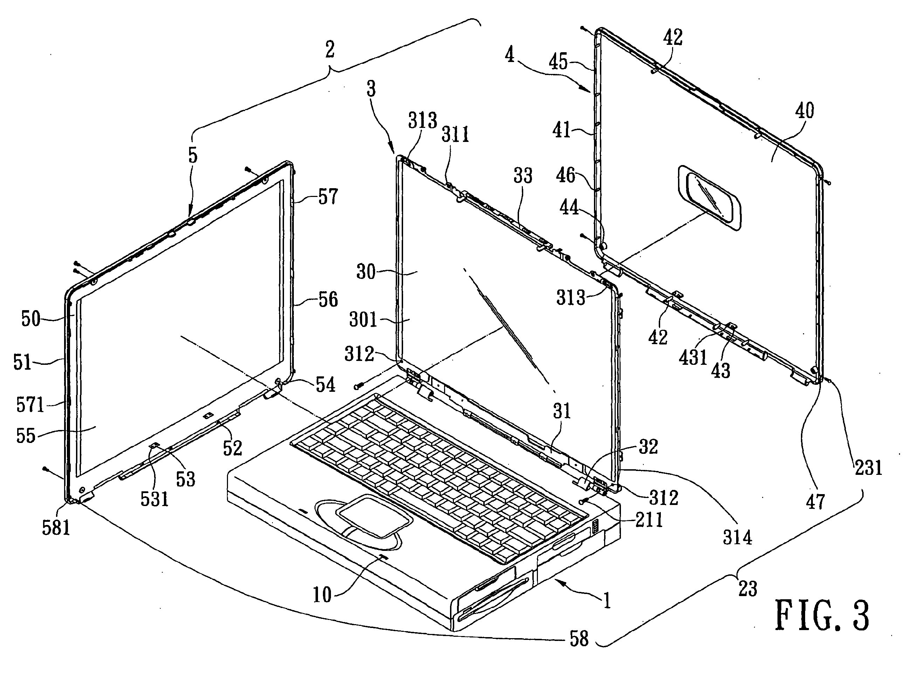

With respect to Fig. 2 and Fig. 3, the present invention provides a notebook having a display apparatus with changeable shells. The notebook has a main body 1 and a display apparatus 2.

The main body 1 has a latching hole 10.

The display apparatus 2 includes a display module 3 and shells. The display module 3 includes a display panel 30, a frame 31, a pivot structure 32, and a latching assembly 33. The display panel 30 is assembled within the frame 31. In this embodiment, the pivot structure 32 is a hinge. The pivot structure 32 has an edge fixed on the frame 31 and another edge fixed on the main body 1, so that the display module 3 is pivotly connected with the main body 1. The latching assembly 33 is assembled on the frame 31 to latch the latching hole 10 of the main body 1. The display module 3 has a rear face 302 and a front face 301 opposite the rear face 302. The front face 301 covers the main body 1. The shells include an outer shell 4 and an inner shell 5. The outer shell 4 has an outer-plate portion 40 and a first outer-peripheral wall 41 integrally connected with each other. The inner shell 5 has an inner-plate portion 50 and a second outer-peripheral wall 51 integrally connected with each other. The outer shell 4 and the inner shell 5 form a receiving space therebetween. The outer-plate portion 40 has an inside assembled on the rear face 302 of the display module 3, and the inner-plate portion 50 has an inside assembled on the front face 301 of the display module 3, so that the display module 3 is received in the receiving space. The display panel 30 has a cable (not showing) connecting to the main body 1.

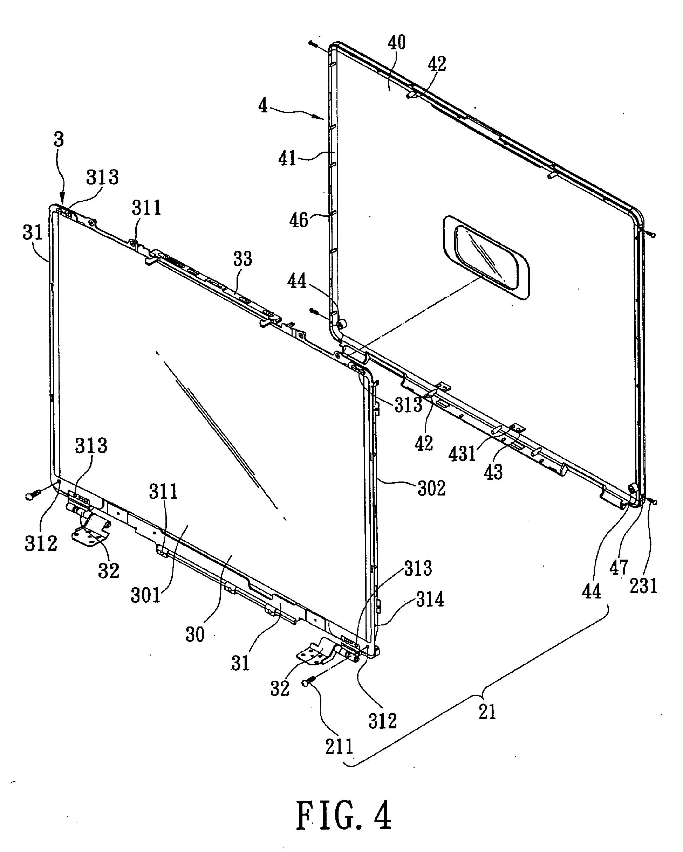

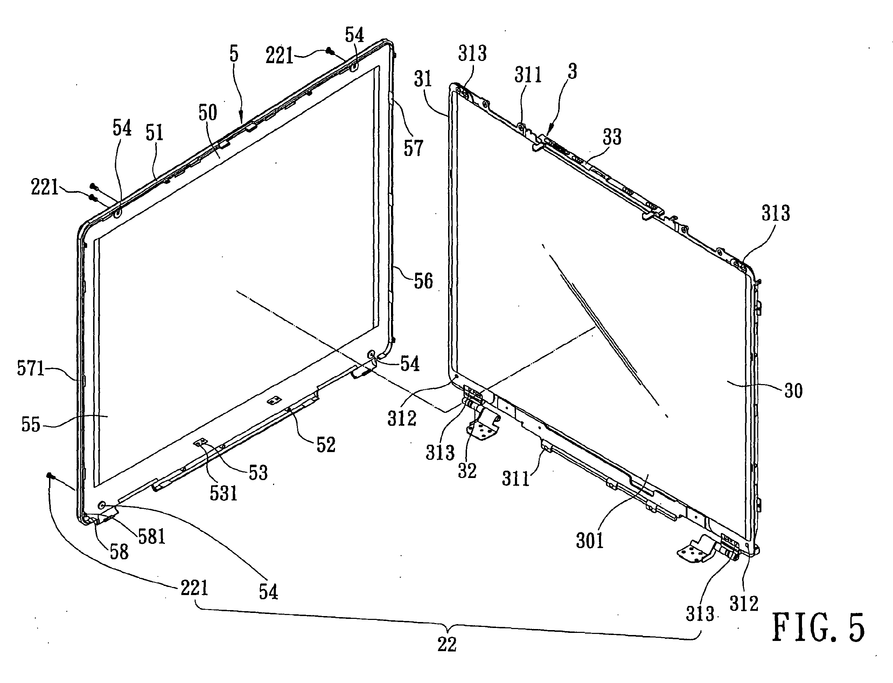

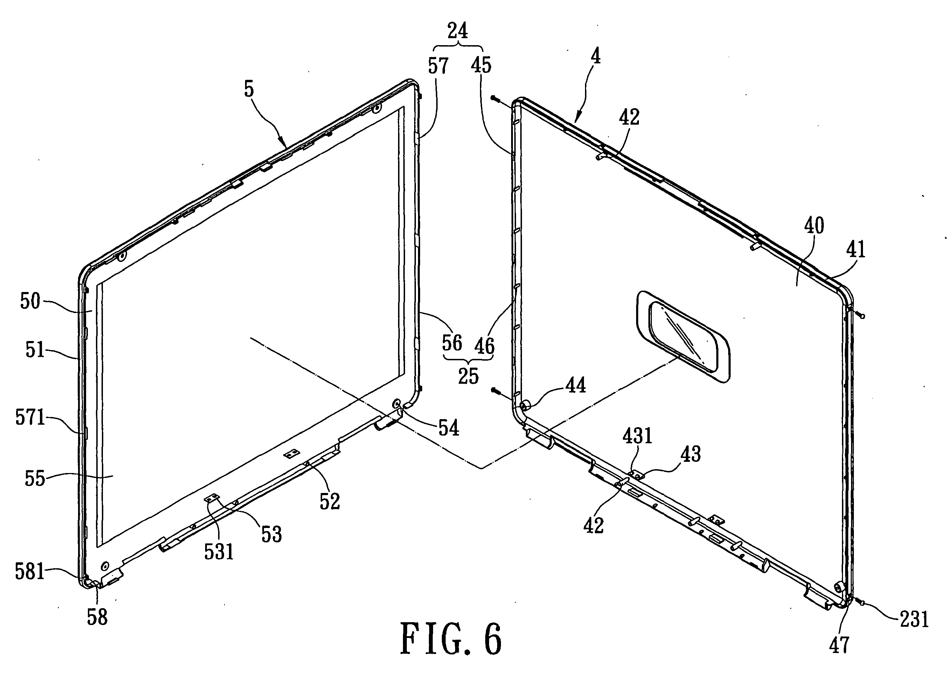

Referring to Fig. 3 to Fig. 6, the display apparatus 2 includes a first retaining structure 21, a second retaining structure 22, a third retaining structure 23, a hooking structure 24, and a positioning structure 25. As shown in Fig. 4, the first retaining structure 21 is disposed on the display module 3 and the outer shell 4, and assembles the outer shell 4 on the rear face 302 of the display module 3. As shown in Fig. 5, the second retaining structure 22 is disposed on the display module 3 and the inner shell 5, and assembles the inner shell 5 on the front face 301 of the display module 3. As shown in Fig. 3, the third retaining structure 23 is disposed on the display module 3, the outer shell 4, and the inner shell 5, and assembles the display module 3, the outer shell 4, and the inner shell 5 together. As shown in Fig. 6, the hooking structure 24 and the positioning structure 25 are disposed on the outer shell 4 and the inner shell 5, and assemble the outer shell 4 and the inner shell 5 to form a receiving space therebetween to receive the display module 3. The first retaining structure 21, the second retaining structure 22, the third retaining structure 23, the hooking structure 24, and the positioning structure 25 of this embodiment are described below.

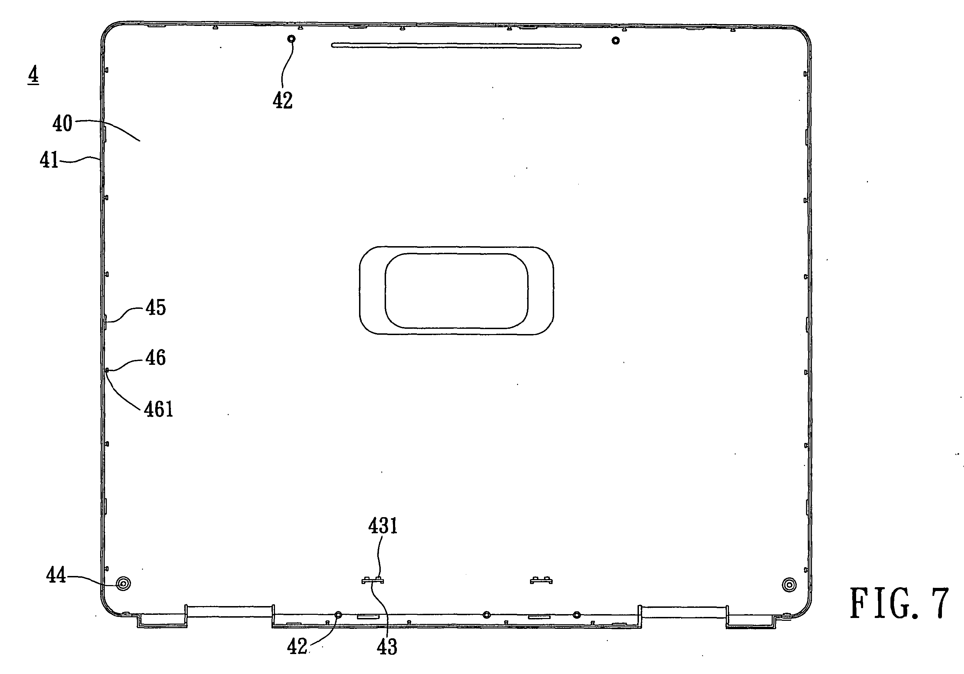

Referring to Fig. 7, the outer-plate portion 40 of the outer shell 4 has a first positioning post 42, a first retaining tab 43, and a first fastening member 44 disposed thereinside. The first retaining tab 43 has a retaining protrusion 431. The first outer-peripheral wall 41 of the outer shell 4 has a hooking protrusion 45 and a positioning tab 46 disposed thereinside. The positioning tab 46 and the first outer-peripheral wall 41 form a cutout 461 therebetween. The first outer-peripheral wall 41 of the outer shell 4 has a third through hole 47 (as shown in Fig. 4).

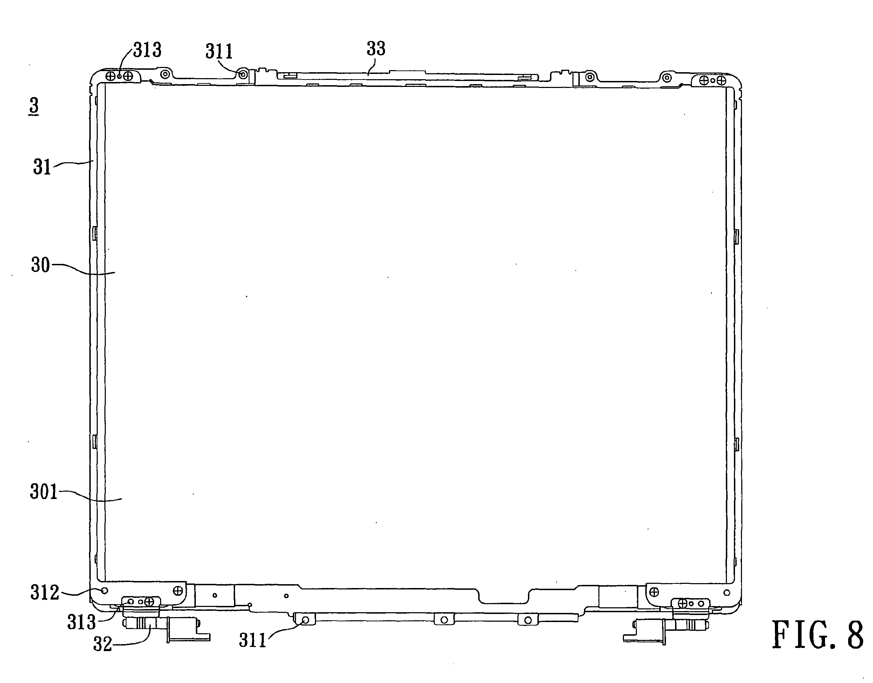

Referring to Fig. 8, the display module 3 has a positioning hole 311, a first through hole 312, a second fastening member 313, and a third fastening member 314 disposed at the frame 31 around a peripheral edge of the display module 3 (as shown in Fig. 4).

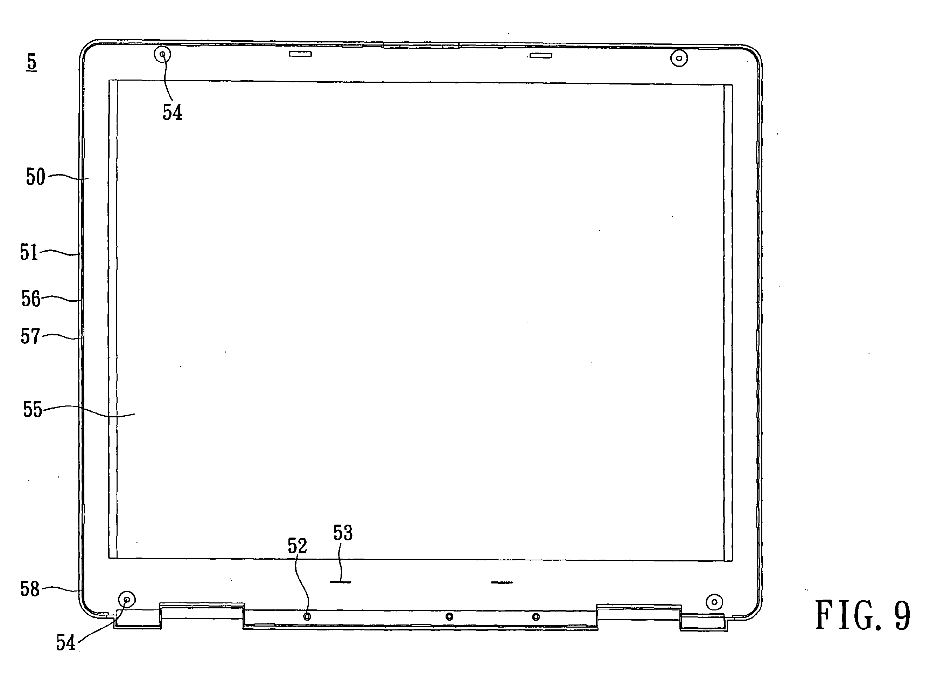

Referring to Fig. 9, the inner-plate portion 50 of the inner shell 5 has a second positioning post 52, a second retaining tab 53, a second through hole 54, and a window 55 disposed at the inside thereof. The second retaining tab 53 has a retaining hole 531 (as shown in Fig. 6). The second outer-peripheral wall 51 of the inner shell 5 has a positioning flange 56, a hooking tab 57, and an ear portion 58. The hooking tab 57 has a cavity 571 disposed in an outside thereof. The ear portion 58 has a fourth through hole 581.

Referring to Fig. 4, Fig. 7, and Fig. 8, the display apparatus 2 includes a first fastening element 211. The first retaining structure 21 includes the first fastening element 211, the first through hole 312 of the display module 3, and the first fastening member 44 of the outer shell 4. In this embodiment, the first fastening element 211 is a screw, and the first fastening member 44 is a thread base.

Referring to Fig. 5, Fig. 8, and Fig. 9, the display apparatus 2 includes a second fastening element 221. The second retaining structure 22 includes the second fastening element 221, the second through hole 54 of the inner shell 5, and the second fastening member 313 of the display module 3. In this embodiment, the second fastening element 221 is a screw, and the second fastening member 313 is a thread base.

Referring to Fig. 3, Fig. 7, and Fig. 9, the display apparatus 2 includes a third fastening element 231. The third retaining structure 23 includes the third fastening element 231, the third through hole 47 of the outer shell 4, the ear portion 58 of the inner shell 5, and the third fastening member 314 of the display module 3. In this embodiment, the third fastening element 231 is a screw, and the third fastening member 314 is a thread base.

Referring to Fig. 6, Fig. 7, and Fig. 9, the hooking structure 24 includes the hooking protrusion 45 of the outer shell 4 and the hooking tab 57 of the inner shell 5. The positioning structure 25 includes the positioning tab 46 of the outer shell 4 and the positioning flange 5 6 of the inner shell 5.

The procedure of assembling the notebook of the present invention is described in the following. First of all, the rear face 302 of the display module 3. is covered with the outer shell 4. The display module 3 is received in the outer-plate portion 40 and the first outer-peripheral wall 41 of the outer shell 4. The first positioning post 42 of the outer shell 4 penetrates through the positioning hole 311 of the display module 3. The frame 31 has an edge retained between the first retaining tab 43 and the first outer-peripheral wall 41 of the outer shell 4. The first fastening element 211 penetrates through the first through hole 312 of the display module 3 and secures at the first fastening member 44 of the outer shell 4. Thereby, the outer shell 4 is firmly assembled on the rear face 3 02 of the display module 3. Next, the inner shell 5 covers on the front face 301 of the display module 3. The display module 3 is received in the inner-plate portion 50 and the second outer-peripheral wall 51 of the inner shell 5, and the display panel 30 corresponds to the window 55 of the inner shell 5. The second positioning post 52 of the inner shell 5 penetrates through the positioning hole 311 of the display module 3. The retaining hole 531 of the second retaining tab 53 of the inner shell 5 hooks the retaining protrusion 431 of the first retaining tab 43 of the outer shell 4. The ear portion 58 of the inner shell 5 inserts inside the first outer-peripheral wall 41 of the outer shell 4. The positioning flange 56 of the inner shell 5 is locked in the cutout 461 of the outer shell 4. The hooking protrusion 45 of the outer shell 4 hooks the cavity 571 of the inner shell 5. Thereby, the inner shell 5 is firmly assembled with the outer shell 4. Meanwhile, the second fastening element 221 penetrates through the second through hole 54 of the inner shell 5 and secures at the second fastening member 313 of the display module 3. Thereby, the inner shell 5 is firmly assembled on the front face 301 of the display module 3. Then, the third fastening element 231 penetrates through the third through hole 47 of the outer shell 4 and the fourth through hole 581 of the ear portion 58 of the inner shell 5 and secures at the third fastening member 314 of the display module 3. Thereby, the display module 3, the outer shell 4, and the inner shell 5 are firmly assembled together.

The procedure of disassembling the notebook of the present invention is described as follows. First of all, the third fastening element 231 is detached to release the display module 3, the outer shell 4, and the inner shell 5. Next, the second fastening element 221 is detached to disassemble the inner shell 5. Then, the first fastening element 211 is detached to disassemble the outer shell 4. Disassembly of the shells is thereby complete. As illustrated above, when the shells are assembled or disassembled, the display module 3 of the display apparatus 2 remains pivotly connected with the main body 1, and the display panel 30 will not be affected. Therefore, it is easy to diversify the exteriors of the shells.

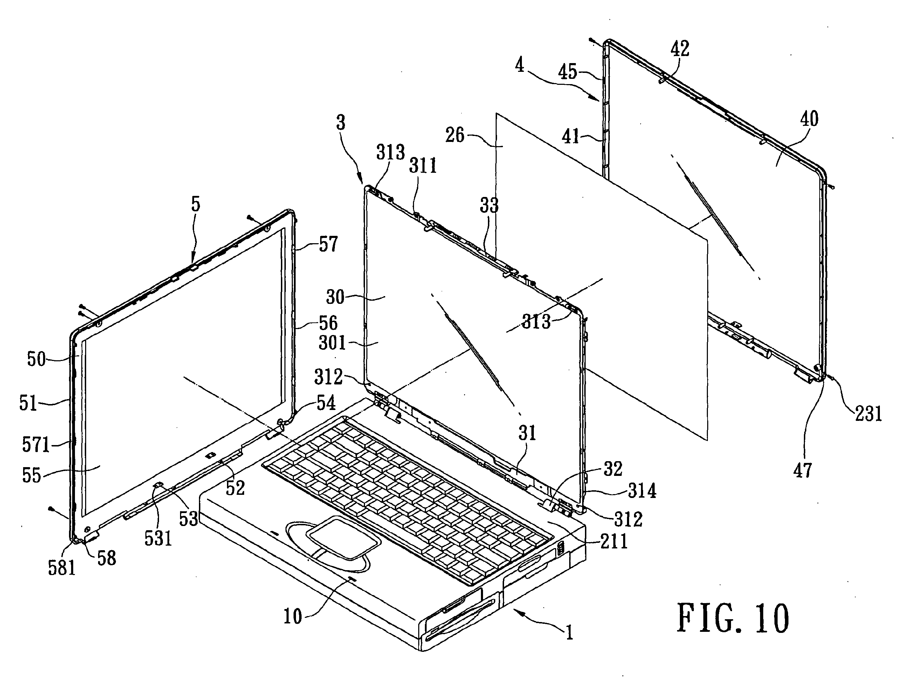

Referring to Fig. 10, the outer shell 4 can be made of transparent material, and a picture 26 can be placed between the outer shell 4 and the display module 3. Therefore, it is easy for consumers to achieve visual changes of the display apparatus 2.

As indicated above, the notebook having a display apparatus with changeable shells of the present invention has the following advantages:
(1) The display module is pivotly connected with the main body, the outer shell is assembled on the rear face of the display module, and the inner shell is assembled on the front face of the display module, so that the shells of the display apparatus are easily assembled or disassembled without affecting the display panel of the display apparatus. Therefore, a display apparatus with the same functions can simply have different shells, so as to provide great changes of combination and personalized design.
(2) The assembly and disassembly of shells of the display apparatus are easy, so that manufacturers can promote more models of notebooks having the same functions of display apparatus but with various exterior styles, so that the manufacturing costs are decreased and the products are able to satisfy the interests of consumers.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A notebook having a display apparatus with changeable shells, comprising:
a main body; and
a display apparatus including a display module and shells, the display module being pivotly connected with the main body, the display module having a rear face and a front face opposite the rear face, the shells including an outer shell and an inner shell, the outer shell being assembled on the rear face of the display module, and the inner shell being assembled on the front face of the display module.

2. The notebook as claimed in claim 1, wherein the display apparatus includes a first retaining structure disposed on the display module and the outer shell, and the first retaining structure assembles the outer shell on the rear face of the display module.

3. The notebook as claimed in claim 2, wherein the display apparatus includes a first fastening element, the display module has a first through hole, and the outer shell has a first fastening member disposed thereinside, wherein the first retaining structure includes the first fastening element; the first through hole, and the first fastening member, and wherein the first fastening element penetrates through the first through hole of the display module and secures at the first fastening member of the outer shell.

4. The notebook as claimed in claim 1, wherein the display apparatus has a second retaining structure disposed on the display module and the inner shell, and the second retaining structure assembles the inner shell on the front face of the display module.

5. The notebook as claimed in claim 4, wherein the display apparatus includes a second fastening element, the inner shell has a second through hole, and the display module has a second fastening member, wherein the second retaining structure includes the second fastening element, the second through hole, and the second fastening member, and wherein the second fastening element penetrates through the second through hole of the inner shell and secures at the second fastening member of the display module.

6. The notebook as claimed in claim 1, wherein the display apparatus has a hooking structure disposed on the outer shell and the inner shell, and the hooking structure assembles the outer shell and the inner shell to form a receiving space therebetween to receive the display module.

7. The notebook as claimed in claim 6, wherein the outer shell has a first outer-peripheral wall, the first outer-peripheral wall having a hooking protrusion disposed thereinside, wherein the inner shell has a second outer-peripheral wall, the second outer-peripheral wall has a hooking tab, and the hooking tab has a cavity disposed in an outside thereof, wherein the hooking structure includes the hooking protrusion and the hooking tab, and wherein the hooking protrusion hooks the cavity.

8. The notebook as claimed in claim 1, wherein the display apparatus has a positioning structure disposed on the outer shell and the inner shell, and the positioning structure assembles the outer shell and the inner shell to form a receiving space therebetween to receive the display module.

9. The notebook as claimed in claim 8, wherein the outer shell has a first outer-peripheral wall, the first outer-peripheral wall has a positioning tab disposed thereinside, and the positioning tab and the first outer-peripheral wall form a cutout therebetween, wherein the inner shell has a second outer-peripheral wall and the second outer-peripheral wall has a positioning flange, wherein the positioning structure includes the positioning tab and the positioning flange, and wherein the positioning flange is locked in the cutout.

10. The notebook as claimed in claim 1, wherein the display apparatus includes a third fastening element, wherein the display apparatus has a third retaining structure disposed on the display module, the outer shell, and the inner shell, the outer shell having a first outer-peripheral wall, the first outer-peripheral wall having a third through hole, the inner shell having a second outer-peripheral wall, the second outer-peripheral wall having an ear portion, the ear portion having a fourth through hole, and the display module having a third fastening member disposed at a peripheral edge thereof, wherein the third retaining structure includes the third fastening element, the third through hole, the ear portion, and the third fastening member, and wherein the ear portion of the inner shell inserts inside the first outer-peripheral wall of the outer shell, and the third fastening element penetrates through the third through hole of the outer shell and the fourth through hole of the ear portion and secures at the third fastening member of the display module.

11. The notebook as claimed in claimed 1, wherein the outer shell has an outer-plate portion and a first outer-peripheral wall integrally connected with each other, the outer-plate portion having a first retaining tab, and the first retaining tab having a retaining protrusion, wherein the inner-shell has an inner-plate portion and a second outer-peripheral wall integrally connected with each other, the inner-plate portion having a second retaining tab and a window and the second retaining tab having a retaining hole, wherein the display module includes a display panel, a frame, a pivot structure, and a latching assembly, the display panel being assembled within the frame and corresponding to the window of the inner shell, the frame having an edge retained between the first retaining tab and the first outer-peripheral wall, the retaining hole of the second retaining tab of the inner shell hooking the retaining protrusion of the first retaining tab, the pivot structure having an edge fixed on the frame and another edge fixed on the main body, and the latching assembly being assembled on the frame to latch a latching hole of the main body.
